# EUROPÄISCHE PATENTANMELDUNG

(11) **EP 1 762 662 A2**
(43) Veröffentlichungstag der Anmeldung: **14.03.2007**
(21) Anmeldenummer: 06468004.4
(22) Anmeldetag: 03.05.2006
(51) Int. Cl.: E04B 1/80, F16L 59/065

(54) **Wärmedämmende füllung für vakuumisolationspaneele**

(30) Priorität: 12.05.2005 SI 200500136
(71) Anmelder: Blues d.o.o., 3320 Velenje (SI)
(72) Erfinder: Golobic, Iztok, Mirna Pec (SI); Hafner, Joze, 4220 Skofja Loka (SI)

(57) **Zusammenfassung**

Die Erfindung betrifft eine wärmedämmende Füllung aus Steinwolle (3) in hermetisch verschlossener Umwandung (1) eines Vakuumisolationspaneels mit einer Dichtigkeit der Steinwolle von 180 bis 250 kg/m3, deren vertikal ausgerichtete Fasern (4) eine gewisse Länge L haben und die in ihrer Zusammensetzung über einen Bindemittelgehalt von 0,5 bis 3,5% verfügt.

## Beschreibung

Die vorliegende Erfindung bezieht sich auf eine wärmedämmende Füllung für Vakuumisolationspaneele, genauer gesagt, auf Steinwolle als wärmedämmende Füllung für Vakuumisolationspaneele.
Der Gegenstand der Erfindung gehört gem. internationaler Patentklassifikation zur Klasse F16 L 59/06.

Bekannt sind Vakuumisolationspaneele, die zur Wärmedämmung von Räumen, Gefässen oder ähnlichem verwendet werden. Im Inneren des Vakuumisolationspaneels befindet sich gewöhnlich ein wärmedämmendes Material von geringer Wärmeleitfähigkeit, das mit einer Umwandung versehen ist, die nach der Vakuumierung undurchdringlich verschweißt wird. Aus dem auf diese Weise zusammengesetzten wärmedämmenden Material entsteht mit der Vakuumumhülle ein Vakuumisolationspaneel von geringer Wärmeleitfähigkeit (6 bis 8)mW/(mK) im Gegensatz zu herkömmlichen Wärmedämmungen, wie zum Beispiel Polyurethanschaum, der eine Wärmeleitfähigkeit von 20 bis 25 mW/(mK) aufweist.
Als Umwandung des Vakuumisolationspaneels, die zur Einfassung der wärmedämmenden Füllung dient, werden verschiedene gas- und dampfundurchlässige Folien verwendet, wie zum Beispiel mehrschichtige Aluminiumfolien, die an den Rändern der Paneelumwandung an den gemeinsamen Kontaktstellen undurchlässig miteinander verpresst sind.

Zu den bekannten Füllungen, die im Inneren der Vakuumisolationspaneele verwendet werden, gehören auch Platten aus Polystyrol mit offener Porenstruktur oder Platten aus Polyurethanhartschaum mit ebenfalls offener Porenstruktur. Vakuumisolationspaneele, die in ihrem Kern eine Füllung aus Polystyrol- oder Polyurethanschaum haben, sind keine guten Schalldämpfer, ausserdem verfügen sie über eine geringere Wiederverwertbarkeit und sind von größerer Brennbarkeit.

Das erwähnte technische Problem wurde in der Erfindung durch eine Wärmedämmfüllung aus Steinwolle mit einer Dichtigkeit von 180 bis 250 kg/m3 und vertikal ausgerichtete Fasern von 3 cm Länge und einem Bindemittelgehalt von 0,5 bis 3,6% gelöst. Mit dieser Art Steinwolle als Wärmedämmfüllung in Vakuumisolationspaneelen wird bei einem Druck von 0,01 bis 0,1 mbar ein sehr niedriger Wärmeleitfähigkeitskoeffizient von 5 bis 7 mW/(mk) erzielt, wobei die hohe Dichtigkeit der Steinwolle diesem Vakuumisolationspaneel seine Stabilität in Form und Maßen gewährleistet und die Faserstruktur eine gute akustische Isolation des Paneels bewirkt. Duch den Gehalt an Steinwolle als natürlicher und nicht brennbarer Grundstoff wird auch die Wiederverwertbarkeit einfacher.

Die Erfindung wird anhand eines, in der beigelegten Zeichnung ausgeweisenen Ausführungsbeispiels näher erläutert:

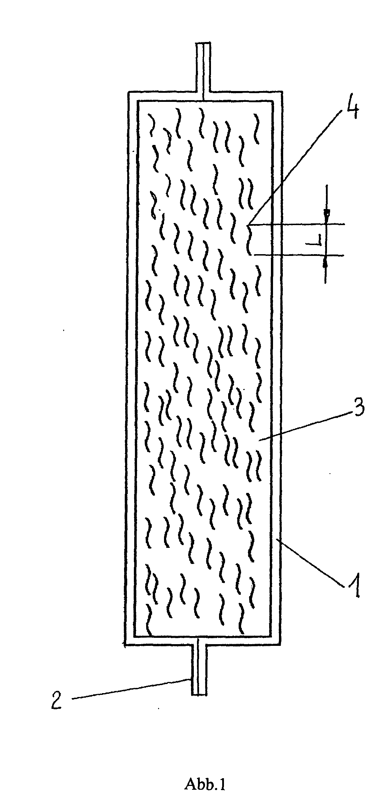

### Abb. 1 Vakuumisolationspaneel mit wärmedämmender Füllung im Querschnitt

Das Vakuumisolationspaneel mit hermetisch verschlossener Umwandung (1), das an den Kontaktstellen (2) undurchlässig verschweisst ist und bei dem im Inneren der hermetisch verschlossenen Umwandung (1) ein Vakuum von 0,01 bis 0,1 mbar besteht, verfügt über eine Füllung, die der Erfindung nach als wärmedämmende Füllung aus Steinwolle (3) mit einer Dichtigkeit von 180 - 250 kg/m3 hergestellt wurde, mit vertikal ausgerichteten Fasern (4), wobei die Länge L einer Faser bis zu 3 cm und der Bindemittelgehalt der Steinwolle 0,5 bis 3,6% betragen.

## Patentansprüche

1. Die Wärmedämmfüllung für Vakuumisolationspaneele mit hermetisch abgeschlossener Umwandung (1), in deren Inneren sich ein Vakuum befindet, ist
**dadurch gekennzeichnet, dass**
sie als wärmedämmende Füllung aus Steinwolle (3) gefertigt wird, die über eine Dichte von 180 bis 250 kg/m3, vertikal ausgerichtete Fasern (4) von bestimmter Länge L und einem gewissen Bindemittelgehalt verfügt.

2. Die Wärmedämmfüllung aus Steinwolle (3) ist nach Anspruch 1
**dadurch gekennzeichnet, dass**
die Länge L der einzelnen vertikal ausgerichteten Fasern (4) bis zu 3 cm beträgt.

3. Die Wärmedämmfüllung aus Steinwolle (3) ist nach Anspruch 1
**dadurch gekennzeichnet, dass**
der Bindemittelgehalt in der Steinwollfüllung (3) 0,5 bis 3,6 % beträgt.

4. Die Wärmedämmfüllung aus Steinwolle (3) ist nach Anspruch 1
**dadurch gekennzeichnet, dass**
sich im Inneren der hermetisch verschlossenen Umwandung (1) ein Vakuum von 0,01 bis 0,1 mbar befindet.
